# EUROPÄISCHE PATENTSCHRIFT

(11) **EP 0 282 784 B1**
(45) Veröffentlichungstag und Bekanntmachung des Hinweises auf die Patenterteilung: **28.04.1993**
(21) Anmeldenummer: 88102780.9
(22) Anmeldetag: 25.02.1988
(51) Int. Cl.: B64D 35/00, B64C 27/14, F02C 7/36

(54) **Gasturbinenanlage für Hubschrauber**
Gas turbine installation for helicopters
Installation de turbine à gaz pour hélicoptères

(30) Priorität: 17.03.1987 DE 3708596
(43) Veröffentlichungstag der Anmeldung: 21.09.1988
(73) Patentinhaber: MTU MOTOREN- UND TURBINEN-UNION MÜNCHEN GMBH, D-80976 München (DE)
(72) Erfinder: Weiler, Wolfgang, D-8060 Dachau (DE)

(56) Entgegenhaltungen:
- EP-A- 0 234 058
- DE-A- 1 756 710
- US-A- 2 596 363
- US-A- 3 002 710

## Beschreibung

Bisher vorgeschlagene Gasturbinenanlagen für Hubschrauber haben den Nachteil eines vergleichsweise großen Einbauvolumens, vor allen Dingen aber den Nachteil einer vergleichsweise großen Einbaulänge. Letzeres wird vorrangig durch die erforderliche später noch näher erörterte gelenkige Verbindung im Leistungsstrang zwischen Rotorhauptgetriebe und Gasturbinenanlage einerseits sowie durch den Abstand zwischen dem Basistriebwerk und dessen Untersetzungsgetriebe andererseits verursacht, wodurch sich der Schwerpunkt des Gasturbinentriebwerks gegenüber dem Eigenschwerpunkt des Fluggerätes z.B. örtlich vergleichsweise weit nach hinten verschiebt und so zu erhöhter Hecklastigkeit führt.

Eine Verbesserung des angesprochenen Sachverhalts könnte zunächst in einer Verringerung des Eigengewichts des Gasturbinentriebwerks dadurch gesehen werden, daß das erforderliche Untersetzungs- oder Triebwerkshauptgetriebe als Modul in das Basistriebwerk integriert wird; letzteres ist sinnvoll, wenn ein derartiges Gasturbinentriebwerk gleichzeitig mit einem Hubschrauber entwickelt wird und die Hauptgetriebe von Triebwerk und Hubschrauber einer gemeinsamen Betriebsoptimierung und -auslegung unterzogen werden können. Ein derartiges Gasturbinentriebwerk mit stirnseitig integriertem Untersetzungs- oder Hauptgetriebe ist z.B. aus dem Handbuch "Die modernen Flugtriebwerke" von Kurt Grasmann, Seite 83, 1982, bekannt.

Wesentliche Nachteil dieser bekannten Anlage wäre jedoch die ausschließliche Anwendungsbezogenheit auf einen bestimmten Fluggerätetyp, d.h., das Basistriebwerk kann praktisch nicht im Hinblick auf unterschiedliche Drehzahlanforderungen bei verschiedenen Hubschrauber- oder tragflächen-gestützten Fluggerätetypen sinnvoll eingesetzt werden.

Insbesondere aus den zuletzt genannten Gründen wird vielfach einem Triebwerkskonzept der Vorzug gegeben, bei dem das Untersetzungs- oder Triebwerkshauptgetriebe dem als Turbomotor gestalteten Basistriebwerk in einem gewissen räumlichen Abstand als autarker Zusatzmodul zugeordnet ist. Diese exponierte Anordnung des Untersetzungs- oder Triebwerkshauptgetriebes bietet zugleich den Vorteil einer nahezu ungestörten Lufteinströmung in den Verdichter, setzt andererseits aber eine Baulängenvergrößerung durch eine vom Triebwerk zum Untersetzungs- oder Triebwerkshauptgetriebe geführte "Fernwelle" voraus. Das zuletzt genannte Antriebskonzept ist z.B. über einen Triebwerkstyp darstellbar, der aus Seite 59 des schon erwähnten Handbuches von Grasmann bekannt ist.

Ein weiterer wesentlicher Nachteil bisher vorgeschlagener Gasturbinenanlagen für Hubschrauber ergibt sich bezüglich einer verhältnismäßig großen axialen Baulänge des Leistungsübertragungsstrangs dadurch , daß eine gelenkige, biegeelastische Ausgleichseinrichtung zwischen dem Triebwerk und dem Hauptgetriebe des Hubschraubers benötigt wird; diese Einrichtung soll vorgegebene Winkel-, Höhen- und Seitenversätze zwischen Triebwerk und Hauptgetriebe des Hubschraubers kompensieren. Als Folge der endlichen Steifigkeit der Zellenstruktur ist diese Verbindung unterhalb einer bestimmten Mindestlänge nicht ausführbar.

Aufgaben- und lösungsgemäß sucht ein aus der EP-A- 0234 058 gemäß Artikel 54 (3) EPÜ bekanner Fall eine verhältnismäßig baulich einfache, montagefreundliche Getriebekonfigurationen zu schaffen und dabei zugleich verhältnismäßig große Über- bzw. Untersetzungsverhältnisse zwischen Leistungsein- und -ausgang bereitzustellen. Dabei sollen die vermeintlichen Nachteile reiner kegelradartiger Zahnradpaarungen und Getriebegestaltungen zu Gunsten vergleichsweise großer Übersetzungsverhältnisse und eines kompakten montagegünstigen Aufbaus beseitigt werden.

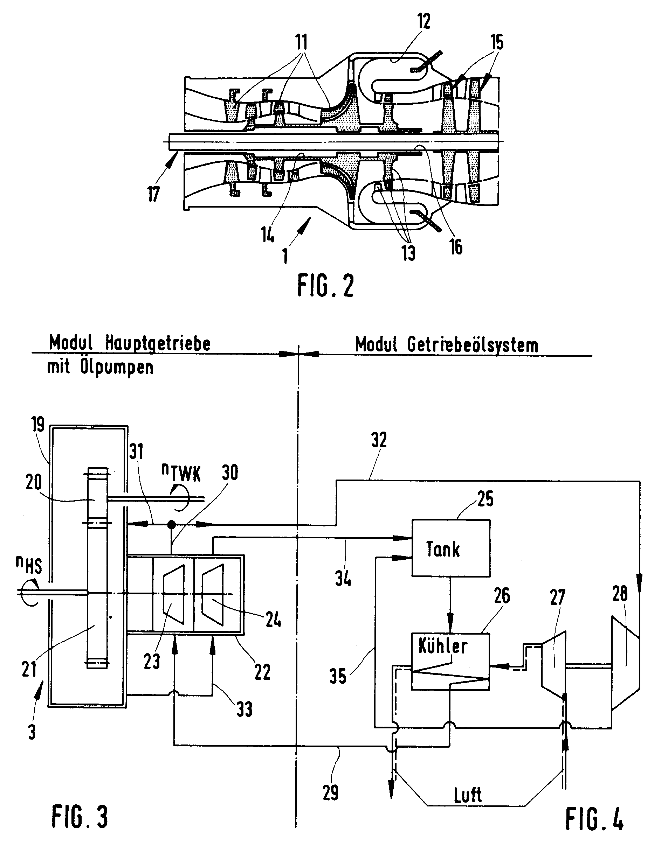

Vorrangig (Fig.2) ist dem bekannten Fall (der Reihe nach) entnehmbar: Mindestens eine Gasturbine, ein Untersetzungsgetriebe, letzteres als Austauschbarer "Modul", eine zwischen Gasturbine und dem Eingang in das Untersetzungsgetriebe angeordnete möglicherweise biegeelastisch ausführbare Gelenkwelle, ein Hubschrauberhauptgetriebe sowie eine gehäuseseitig feste Verbindbarkeit zwischen Untersetzungsgetriebe (Gasturbine) und Hauptgetriebe des Hubschraubers.

Der Erfindung liegt die Aufgabe zugrunde, eine Gasturbinenanlage nach der zuvor genannten bekannten Art anzugeben, bei der das Gasturbinentriebwerk - unter Einschluß der erwähnten Ausgleichseinrichtung zwischen Triebwerk und Hauptgetriebe des Hubschraubers - in einem deutlich reduzierten Längenabstand zum Rotorhauptgetriebe angeordnet ist.

Die gestellte Aufgabe ist durch Patentanspruch 1 erfindungsgemäß gelöst.

Die Erfindung ermöglicht einen deutlich reduzierten Längenabstand zwischen Basistriebwerk und Hubschrauberhauptgetriebe, wodurch der Triebwerksschwerpunkt deutlich weiter in Richtung auf dem Fluggeräteschwerpunkt hin verlagert werden kann.

Der erhebliche Gewinn an reduzierter Baulänge der Anlage gelingt dadurch, daß der ansonsten durch eine sogenannte "Fernwelle" bedingte Zwischenraum zwischen Basistriebwerk und Untersetzungsgetriebe für eine Integration der normalerweise mit einer erheblichen Anlagenlänge verknüpften gelenkigen Ausgleichseinrichtung ausgenutzt wird. Dabei ist das Untersetzungsgetriebe kraftschlüssig starr auf kurzem axialen Wege mit dem Hubschrauberhauptgetriebe verknüpft. Gegenseitiger Lageversatz wird also zwischen dem Basistriebwerk auf der einen Seite und dem Hubschrauberhauptgetriebe nebst Untersetzungsgetriebe des Triebwerks auf der anderen Seite kompensiert.

Sämtliche u.a. eingangs geschilderten Vorteile eines mit Abstand zum Basistriebwerk angeordneten, bedarfsweise austauschbaren Untersetzungsgetriebe-Moduls bleiben erhalten, und zwar u.a.
- Verwendung des gleichen Basistriebeerktyps bei verschiedenen Fluggerätetypen (Hubschrauber oder "Starrflügler" mit Propellerantrieb);
- günstige Luftanströmung in den Verdichter bei Basistriebwerk mit Frontabtrieb und Anordnung der Triebwerksanlage hinter dem Hubschrauberhauptgetriebe;
- günstige Abgasaustrittsgestaltung bei Basistriebwerk mit Heckabtrieb und Anordnung der Triebwerksanlage vor dem Hubschrauberhauptgetriebe.

Vorteilhafte Ausgestaltungen der Erfindung ergeben sich aus den Patentansprüche 2 bis 10. Hierzu wäre insbesondere auf Anpsruch 6 zu verweisen, wonach die wesentlichen elemente des Ölsystems aus dem Triebwerkshaupt- oder Untersetzungsgetriebemodul herausgelöst und in einem besonderen Modul zusammengefaßt sind, um dne angegebenen Schwerpunktkriterien noch besser gerecht werden zu können.

Die gemäß Anspruch 10 ferner mögliche Gelenkverriegelung für den kardanisch gekoppelten Teil der Ausgleichseinrichtung gestattet bezüglich des Transports sowie der Triebwerkshandhabung beim Ein- und Ausbau gleiche Eigenschaften wie die bisher bekannten Bauweisen.

Anhand der Zeichungen ist die Erfindung beispielsweise weiter erläutert;
es zeigen:
- Fig. 1: die schematische Seitenansicht der erfindungsgemäßen Anlage,
- Fig. 2: ein schematisches Längsschnittbild des Basistriebwerks der Anlage,
- Fig. 3: ein schematisches Schnittbild des Moduls "Untersetzungsgetriebe nebst Ölpumpen",
- Fig. 4: den blockschaltbildartig dargestellten Zusatzmodul für die wesentlichen Elemente des Getriebeölsystems,
- Fig. 5: vergrößert wiedergebenen Einzelheiten aus Fig. 1 betreffend die Anordnung und Ausbildung der gelenkigen Ausgleichseinrichtung zwischen Basistriebwerk und zum Untersetzungsgetriebe und
- Fig. 6: einen Teillängsschnitt des kardanisch gekoppelten Teils der Ausgelichseinrichtung nebst beispielhafter Verriegelungsvorrichtung.

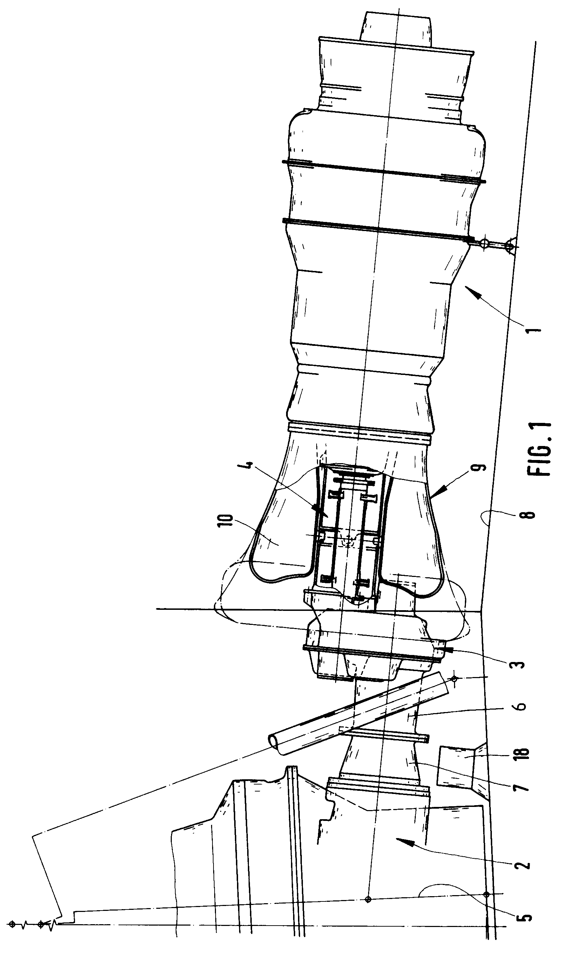

Die in Fig. 1 schematisch dargestellte Gasturbinenanlage eines Hubschraubers weist zur Übertragung der Wellenleistung eines Basistriebwerks 1 auf ein Hubschrauberhauptgetriebe 2 ein Untersetzungsgetrieb 3 und eine gelenkige Ausgleichseinrichtung 4 auf, die gegenseitigen Lageversatz zwischen Triebwerk 1 und Hubschrauberhauptgetriebe 2 kompensiert. Das Untersetzungsgetriebe 3 ist als autarker Triebwerksmodul ausgebildet. Bei der Gasturbinenanlage ist das Untersetzungsgetriebe 3 direkt kraftschlüssig und gehäuseseitig fest mit dem Hubschrauberhauptgetriebe 2 gekoppelt; die gelenkige Ausgleichseinrichtung 4 ist zwichen dem Basistriebwerk 1 und dem Untersetzungsgetriebe 3 angeordnet und ausgebildet.

Über das Hubschrauberhauptgetriebe 2 wird der mit Hubschrauber- Propeller- Blättern ausgerüstete Hubrotor angetrieben, dessen Achse mit 5 bezeichnet ist. Mittels entsprechender Gehäuseschalen 6,7 ist das Untersetzungsgetriebe 3 des Triebwerks starr mit dem Hubschrauberhauptgetriebe 2 verflanscht.

Ferner ist aus Fig. 1 das plattformartige Dach 8 des Hubschraubers entnehmbar, auf dem die Gasturbinenanlage montiert ist und zwar so, daß das Basistriebwerk 1 einschließlich der übrigen, die Triebwerksleistung übertragenden Komponenten leicht von oben außen nach inten unter geneigt sind und mit der Achse 5 des Hubrotors einen Winkel > 90 Grad bilden.

Beim vorliegenden Ausführungsbeispiel nach Fig. 1 - mit Anordnung der Gasturbinenanlage hinter dem Hubschrauberhauptgetriebe - wird die Wellenleistung an der Frontseite des Basistriebwerks 1 entnommen und von dort weiter übertragen. Fig. 1 zeigt ferner einen das Untersetzungsgetriebe 3, die Ausgleichseinrichtung 4 und den Triebwerkseinlauf 10 enthaltenden Zusatzmodul 9 des Basistriebwerks 1.

Im Gegensatz zum dargestellten Beispiel wäre es auch denkbar, sich die Gasturbinenanlage vor dem Hubschrauberhauptgetriebe angeordnet vorzustellen, und zwar so, daß die Wellenleistung an der Heckseite des Basistriebwerks entnommen und von dort weiter übertragen wird. In diesem Fall könnnte dann der Zusatzmodul zum Basistriebwerk das Untersetzungsgetriebe, die Ausgleichseinrichtung und zumindest Teile des Abgassystems enthalten.

Fig. 2 verkörpert einen schematisch dargestellten Längsschnitt des Basistriebwerks 1. Im Sinne der Hauptdurchströmrichtung - von links nach rechts gesehen - beinhaltet der Gasgenerator des Besistriebwerks 1 einen kombnierten Axial-Radialverdichter 11, eine Umkehr-Ringbrennkammer 12 und eine Verdichterantriebsturbine 13, die über eine gemeinsame Hohlwelle 14 den Verdichter 11 antreibt. Vom Abgasstrom der Verdichterantriebsturbine 13 ist eine frei laufend angeordnete Nutzleistungsturbine 14 (zweistufig) beaufschlagt und angetrieben, die auf einer zentralen Turbineninnenwelle 16 sitzt, welche durch die Hohlwelle 14 des Gasgenerators hindurch bis in den Bereich des Verdichtereintritts geführt ist. Am Wellenende 17 erfolgt also die Wellenleistungsentnahme.

Fig. 3 veranschaulicht Einzelheiten des als autarker Modul ausgebildeten Untersetzungsgetriebes 3 des Triebwerks, wobei der wesentliche Teil des Getriebeölsystems aus dem Modul des Untersetzungsgetriebes 3 herausgegliedert und gemäß Fig. 4 in einem gesonderten Modul untergebracht ist. In diesem gesonderten Modul könnte im übrigen auch das gesamte Ölsystem für die Versorgung des Untersetzungsgetreibes 3 enthalten sein. In Fig. 1 ist die Anordnung dieses gesonderten Moduls, der hier vorzugsweise in der Nähe des Hubschrauberhauptgetriebes 2 angeordnetist, durch den Kasten 18 verkörpert. Durch diese Anordnung des Kastens 18 bzw. gesonderten Moduls in der Nähe des Hauptgetriebes 2, bzw. in einem Bereich zwischen Untersetzungsgetriebe 3 und Hubschrauberhauptgetriebe 2, wird ein weiterer Beitrag zu Verlagerung des Gasturbinenanlagenschwerpunktes in Richtung auf die Achse 5 des Hubrotors geleistet.

Beispielsweise enthält der Modul des Untersetzungsgetriebes 3 ein in einem Getriebegehäuse 19 angeordnetes, die einfließende Tribwerksdrehzahl (n_{Twk}) reduzierendes Paar kämmender Zahnräder 20,21. Ein an der Rückseite des Getriebegehäuses 19 befindliches Pumpengehäuse 22 enthält vom Zahnrad 21 angetriebene Ölpumpen 23,24, die örtliche gegeneinander abgeschottet angeordnet sind.

Der gesonderte Modul nach Fig. 4 bzw. Kasten 18 (Fig. 1) enthält wesentliche Elemente des Ölsystems wie beispielsweise einen Öltank 25, einen Luft/Öl-Kühler 26, ein Kühlergebläse 27 sowie einen hydraulischen Antriebsmotor 28 des Kühlergebläses 27. Anstelle des hydraulischen Antriebsmotors 28 könnte z.B. auch ein elektrischen Antriebsmotor vorgesehen sein.

Obwohl die Module nach Fig. 3 und 4 örtlich getrennt angeordnet sind, stehen sie im Rahmen der Getriebeölversorgung in einem funktionellen Zusammenhang zueinander.

Nach Durchlaufen des Luft/Öl-Kühlers 26 fördert die Ölpumpe 23 das über die Leitung 29 zufließende Öl in das Getriebegehäuse 19 - Zuleitungen 30,32. Die andere Ölpumpe 24 fördert das aus dem Getriebegehäuse 19 über die Leitung 33 zufließende Öl über eine weitere Leitung 34 in den Tank 25 zurück. Aus dem hydraulischen Antriebsmotor 28 fließt das Öl über eine weitere Rückflußleitung 35 ebenfalls stets in den Tank 25 zurück.

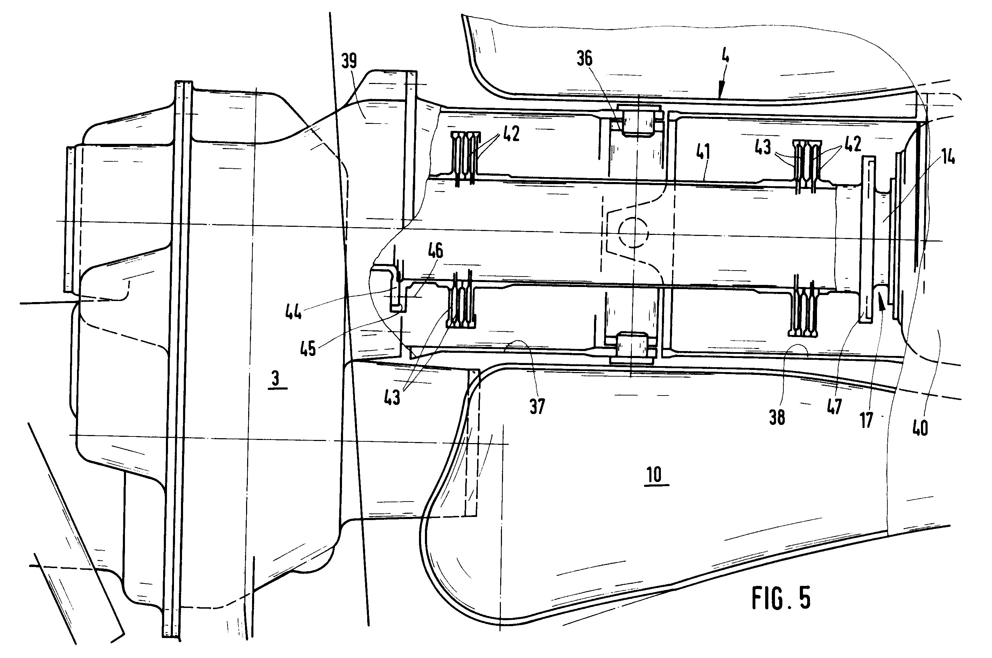

Die gelenkige, elastische Ausgleichseinrichtung 4 (Fig. 5) beinhaltet eine winkelbewegliche kardanische Gelenkverbindung 36 zwischen zwei aneinandergrenzenden einen Enden von Rohrteilen 37,38. Der eine Rohrteil 37 ist am betreffenden anderen Ende mit dem einen Gehäusefortsatz 39 des Untersetzungsgetriebes 3 gehäusefest verflanscht. Der andere Rohrteil 38 ist am betreffenden anderen Ende mit einem wellenabtriebsseitig benachbarten Gehäuseendteil 40 des Basistriebwerks gehäusefest verflanscht. Ferner beinhaltet die Ausgleichseinrichtung 4 eine innere Gelenkwelle 41, die im Bereich beider äußeren Enden in das Rohrfleisch eingeschweißte, radial auskragende sowie mit Abstand zueinander angeordneten Membranen 42, 43 aufweist. Die Membranen 42,43 bilden jeweils kraftschlüssige, biegeelastische Wellengelenkverbindungen aus und haben zugleich eine schwingungsdämpfende Funktion. Gemäß Fig. 1 oder 5 ist die Ausgleichseinrichtung 4 in kraftschlüssig bzw. gehäuseseitig gekoppelter Außerbetriebssituation koaxial zur verlängerten Achse des Basistriebwerks angeordnet.

Insbesondere die Verbindung zwischen der inneren Gelenkwelle 41 und dem Untersetzungsgetriebe 3 kann ferner einfachst durch eine Wellensteckverbindung erfolgen, indem also z.B. gemäß Fig. 5 das flanschartige Ende 44 der Gebtriebeeingangswelle, als Eingangsteil des Untersetzungsgetriebes 3, in das hülsenförmige Flanschende 45 der Gelenkwelle 41 geschoben wird, wobei die kraftschlüssige Verbindung z.B. mittels Bolzen entlang z.B. der Linie 46 erfolgen kann. In der beschriebenen Weise aufsteck- oder flanschartig kann dann auch das übrige Ende 47 der Gelenkwelle 41 mit dem Wellenende 17 (siehe auch Fig. 2) der Turbinenwelle 16 kraftschlüssig gekoppelt werden.

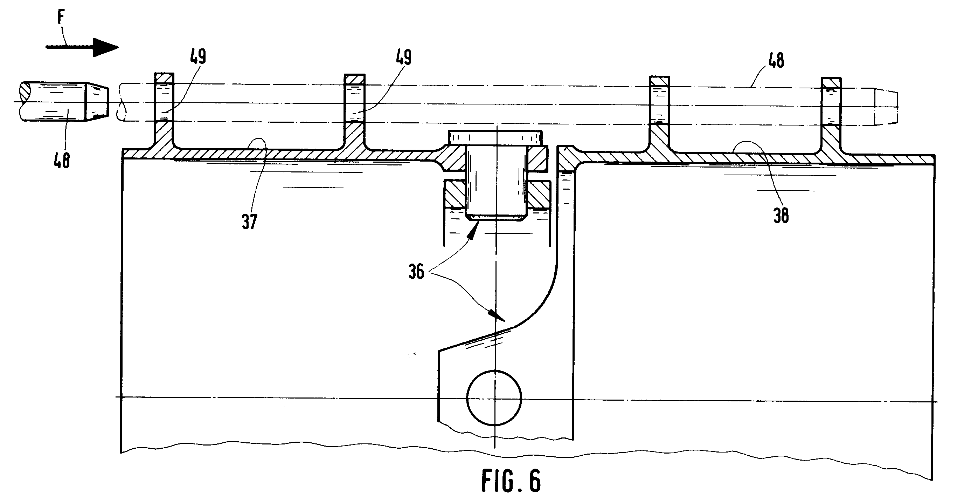

Um bezüglich des Transports sowie der Triebwerkshandhabung beim Ein- und Ausbau gleiche Eigenschaften wie bei bisher bekannten Bauweisen zu erzielen, wird eine Verriegelungsvorrichtung der beiden kardanisch gelenkig verbunden Rohrteile 37,38 vorgeschlagen, die gemäß Fig. 6 beispielsweise aus einer Stange 48 besteht, die in Rohrlängsrichtung (Pfeil F) durch Ösen 49 geschoben wird. Dadurch wird das Untersetzungsgetriebe 3 quasi starr mit dem Basistriebwerk 1 verblockt und ein loses "Herumflattern" unterbunden (Transportsicherung).

Die Erfindung ist auch für den Einsatz zweier oder mehrere Gasturbinentriebwerke per Fluggerät, insbesondere Hubschrauber, geeignet.

## Patentansprüche

1. Gasturbinenanlage für Hubschrauber, mit einem Basistriebwerk (1), einem als autarken Zusatzmodul gestalteten Untersetzungsgetriebe (3) und mit einer, zur Kompensation gegenseitigen Lageversatzes, zwischen Triebwerk und einem Hubschrauberhauptgetriebe (2) angeordneten Ausgleichseinrichtung (4), worin das Untersetzungsgetriebe (3) direkt am Hubschrauberhauptgetriebe (2) befestigt ist und die Ausgleichseinrichtung (4) eine das betreffende Wellenende (17) des Basistriebwerks (1) mit einem Eingangsteil (44) des Untersetzungsgetriebes (3) koppelnde, biegeelastische Gelenkwelle (41) und zwei, die Gelenkwelle (41) ummantelnde Rohrteile (37,38) aufweist, die an den einen Enden durch eine kardanische Gelenkverbindung (36) winkelbeweglich miteinander gekoppelt sind und, am jeweils anderen Ende, das eine Rohrteil (37) gehäuseseitig fest mit mit dem Untersetzungsgetriebe (3), das andere Rohrteil (38) gehäuseseitig fest mit dem Basistriebwerk (1) verbunden ist.

2. Gasturbinenanlage nach Anspruch 1, die - bezogen auf die Flugrichtung - hinter dem Hubschrauberhauptgetriebe angeordnet ist, wobei die Wellenleistung an der Frontseite des Basistriebwerks entnommen wird, dadurch gekennzeichnet, daß ein Zusatzmodul (9) des Basistriebwerkes (1) das Untersetzungsgetriebe (3), die Ausgleichseinrichtung (4) und den Triebwerkseinlauf (10) enthält.

3. Gasturbinenanlage nach Anspruch 1, die - bezogen auf die Flugrichtung - vor dem Hubschrauberhauptgetriebe angeordnet ist, wobei die Wellenleistung an der Heckseite des Basistriebwerks entnommen wird, dadurch gekennzeichnet, daß ein Zusatzmodul des Basistriebwerks das Untersetzungsgetriebe, die Ausgleichseinrichtung und Teile des Abgassystems enthält.

4. Gasturbinenanlage nach Anspruch 1, dadurch gekennzeichnet, daß die Ausgleichseinrichtung (4) koaxial zur verlängerten Achse des Basistriebwerks angeordnet ist.

5. Gasturbinenanlage nach einem oder mehreren der Ansprüche 1,2 und 4 oder 1,3 und 4, dadurch gekennzeichnet, daß das Untersetzungsgetriebe (3) durch eine Steckwellen-Verbindung (44,45) mit einem Gelenkwellenstrang (41) der Ausgleichseinrichtung (4) und/oder einem zum Hubschrauberhauptgetriebe (2) führenden Wellenstrang kraftschlüssig gekoppelt ist, wobei das Untersetzungsgetriebe (3) gehäuseseitig starr mit dem Hubschrauberhauptgetriebe (2) verflanscht ist.

6. Gasturbinenanlage nach einem oder mehreren der Ansprüche 1,2,4 und 5 oder 1,3,4 und 5, dadurch gekennzeichnet, daß ein gesonderter Triebwerksmodul (18) im wesentlichen das Ölsystem für das Untersetzungsgetriebe (3) enthält.

7. Gasturbinenanlage nach Anspruch 6, dadurch gekennzeichnet, daß der gesonderte Modul (18) für das Ölsystem vorzugsweise in der Nähe des Hubschrauberhauptgetriebes (2), zwischen dem letzteren und dem Untersetzungsgetriebe (3), angeordnet ist.

8. Gasturbinenanlage nach Anspruch 6, dadurch gekennzeichnet, daß der gesonderte Triebwerksmodul (18) wesentliche Einrichtungen des Ölsystems wie Öltank (25), Luft/Ölkühler (26), Kühlergebläse (27) sowie den Antriebmotor (28) des Kühlergebläses (27) aufweist (Fig.4).

9. Gasturbinenanlage nach Anspruch 6 oder 8, dadurch gekennzeichnet, daß der das Untersetzungsgetriebe (3) enthaltende Modul Ölpumpen (23,24) des Ölsystems aufweist, die antriebsseitig mit dem Untersetzungsgetriebe (3) gekoppelt sind (Fig. 3).

10. Gasturbinenanlage nach Anspruch 1, dadurch gekennzeichnet, daß eine Verriegelungsvorrichtung für die kardanisch gelenkig verbundenen Rohrteile (37,38) der Ausgleichseinrichtung (4) vorgesehen ist.

## Claims

1. A gas turbine plant for helicopters, with a basic propulsion unit (1), a reduction gear mechanism (3) constructed as a self-sufficient attachment module and with, for the compensation of reciprocal positional offset, a compensating unit (4) disposed between the propulsion unit and a main gear mechanism (2) of the helicopter, in which the reduction gear mechanism (3) is mounted directly on the helicopter main gear mechanism (2) while the compensating unit (4) has a flexurally elastic cardan shaft (41) which couples the relevant shaft end (17) of the basic propulsion unit (1) to an input part (44) of the reduction gear mechanism (3) and with, sheathing the cardan shaft (41), two tube parts (37, 38) coupled to each other for angular movement at one end by a cardan joint (36) and, at their respective other ends, the tube part (37) is connected at the housing end rigidly to the reduction gear mechanism (3) while the other tube part (38) is at the housing end rigidly connected to the basic propulsion unit (1).

2. A gas turbine plant according to Claim 1 which, in relation to the direction of flight - is disposed behind the helicopter main gear mechanism, the shaft output being taken off at the front of the basic propulsion unit, characterised in that an attachment module (9) of the basic propulsion unit (1) contains the reduction gear mechanism (3), the compensating unit (4) and the propulsion unit intake (10).

3. A gas turbine plant according to Claim 1 which, in relation to the direction of flight - is disposed in front of the helicopter main gear mechanism, the shaft output being taken off at the rear of the basic propulsion unit, characterised in that an attachment module of the basic propulsion unit contains the reduction gear mechanism, the compensating unit and parts of the exhaust gas system.

4. A gas turbine plant according to Claim 1, characterised in that the compensating unit (4) is disposed coaxially with the elongated shaft of the basic propulsion unit.

5. A gas turbine plant according to one or more of Claims 1, 2 and 4 or 1, 3 and 4, characterised in that the reduction gear mechanism (3) is operatively connected by a push-in shaft joint (44, 45) to a cardan shaft line (41) of the compensating unit (4) and/or a shaft line leading to the helicopter main gear mechanism (2), the reduction gear mechanism (3) being at the housing end rigidly flanged on the helicopter main gear mechanism (2).

6. A gas turbine plant according to one or more of Claims 1, 2, 4 and 5 or 1, 3, 4 and 5, characterised in that a separate propulsion unit module (18) contains essentially the oil system for the reduction gear mechanism (3).

7. A gas turbine plant according to Claim 6, characterised in that the separate module (18) for the oil system is preferably disposed in the vicinity of the helicopter main gear mechanism (2), between the latter and the reduction gear mechanism (3).

8. A gas turbine plant according to Claim 6, characterised in that the separate propulsion unit module (18) contains essential units of the oil system such as the oil tank (25), oil/air cooler (26), cooler blower (27) and the driving motor (28) of the cooler blower (27) (Fig. 4).

9. A gas turbine plant according to Claim 6 or 8, characterised in that the module containing the reduction gear mechanism (3) comprises oil pumps (23, 24) of the oil system which on the drive side are connected to the reduction gear mechanism (3) (Fig. 3).

10. A gas turbine plant according to Claim 1, characterised in that there is an interlocking device for the tube parts (37, 38) of the compensating unit (4) which are articulatingly connected by a cardan joint.

## Revendications

1. Installation de turbine à gaz pour hélicoptères, avec un propulseur de base (1), un réducteur de vitesse (3) constitué comme un module additionnel autonome et avec un dispositif compensateur (4) pour compenser le déport réciproque de position, dispositif placé entre le propulseur et une transmission principale d'hélicoptère (2), installation dans laquelle le réducteur (3) est directement fixé sur la transmission principale d'hélicoptère (2) et le dispositif compensateur (4) présente un arbre articulé (41), flexible, accouplant l'extrémité correspondante de l'arbre (17) du propulseur de base (1) à une pièce d'entrée (44) du réducteur (3) et deux pièces tubulaires (37, 38) enveloppant l'arbre articulé (41), pièces qui sont accouplées l'une à l'autre à l'une de leurs extrémités par une liaison articulée (36) du type à joint de cardan angulairement mobile et à chacune de leur autre extrémité l'une des pièces tubulaires (37) étant reliée solidairement du côté du carter au réducteur (3), l'autre pièce tubulaire (38) étant reliée solidairement du côté du carter au propulseur de base (1).

2. Installation de turbine à gaz selon la revendication 1, qui est disposée par rapport à la direction du vol, derrière la transmission principale d'hélicoptère, la puissance d'accouplement étant prélevée sur la face frontale du propulseur de base, installation de turbine caractérisée en de qu'un module additionnel (9) du propulseur de base (1) contient le réducteur de vitesse (3), le dispositif compensateur (4) et l'entrée du propulseur (10).

3. Installation de turbine à gaz selon la revendication 1, qui, par rapport au sens de vol, est disposée avant la transmission principale d'hélicoptère, la puissance d'accouplement étant prélevée sur la face arrière du propulseur de base, installation de turbine à gaz, caractérisée en ce qu'un module additionnel du propulseur de base contient le réducteur de vitesse, le dispositif compensateur et des pièces du système d'échappement des gaz.

4. Installation de turbine à gaz selon la revendication 1, caractérisée en ce que le dispositif compensateur (4) est disposé de façon coaxiale au prolongement de l'axe de propulseur de base.

5. Installation de turbine à gaz selon une ou plusieurs des revendications 1, 2 et 4 ou 1, 3 et 4, caractérisée en ce que le réducteur (3) est accouplé par une liaison par arbre d'enfoncement (44, 45) à une ligne d'arbre articulé (41) du dispositif compensateur (4) et/ou à une ligne d'arbre menant a la transmission principale d'hélicoptère (2), par interpénétration par la force, le réducteur (3) étant bridé rigidement du côté du carter sur la transmission principale d'hélicoptère (2).

6. Installation de turbine à gaz selon une ou plusieurs des revendications 1, 2, 4 et 5 ou 1, 3, 4 et 5, caractérisée en ce qu'un module de propulseur séparé (18) contient essentiellement le système d'huile pour le réducteur (3).

7. Installation de turbine à gaz selon la revendication 6, caractérisée en ce que le module séparé (18) pour le système d'huile est disposé de préférence au voisinage de la transmission principale d'hélicoptère (2), entre cette dernière et le réducteur (3).

8. Installation de turbine à gaz selon la revendication 6, caractérisée en ce que le module séparé de propulseur (18) présente les dispositifs essentiels du système d'huile, tels que le réservoir d'huile (25), le radiateur air/huile (26), le ventilateur de refroidissement (27) ainsi que le moteur d'entraînement du ventilateur de refroidissement (27) (figure 4).

9. Installation de turbine à gaz selon la revendication 6 ou 8, caractérisé en ce que le module contenant le réducteur de vitesse (3) présente des pompes à huile (23, 24) du système d'huile, qui sont accouplées au réducteur (3) du côté de l'entraînement (figure 3).

10. Installation de turbine à gaz selon la revendication 1, caractérisée en ce que l'on prévoit un dispositif de verrouillage pour les pièces tubulaires (37, 38) du dispositif compensateur (4) reliées de façon articulée par un joint de cardan.
